# EUROPEAN PATENT APPLICATION

(11) **EP 1 880 787 A1**
(43) Date of publication of application: **23.01.2008**
(21) Application number: 07252471.3
(22) Date of filing: 18.06.2007
(51) Int. Cl.: B23K 9/04, B23K 10/02, B23K 26/34, F01D 5/00, B23P 6/04

(54) **Process for repairing turbine engine components**

(30) Priority: 18.07.2006 US 489154
(71) Applicant: United Technologies Corporation, Hartford, CT 06101 (US)
(72) Inventor: Vargas, Chris, Hamden, CT 06517 (US); Rose, William M., Warren, MA 01585 (US)
(74) Representative: Leckey, David Herbert

(57) **Abstract**

A process for repairing a component includes the steps of placing a piece of refractory metal material (16) over an area (12) of component to be repaired; depositing a repair filler metal (18) material proximate to the piece of refractory metal material (16) in an amount sufficient to repair the component; subjecting the repair filler material (18) to a welding treatment without directly heating the piece of refractory metal material (16); flowing the repair filler material (18) within the area (12); and casting the repair filler material (18).

## Description

### FIELD OF THE INVENTION

The invention relates to a process for repairing turbine engine components and, more particularly, to repairing turbine engine turbine blades.

### BACKGROUND OF THE INVENTION

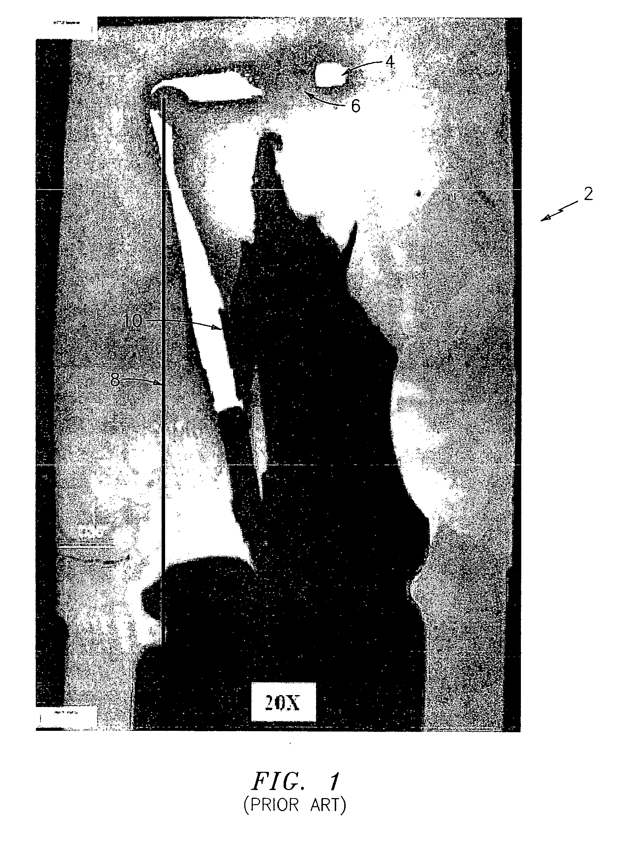

Currently, gas turbine blade tips and trailing edge regions are repaired using a welding process such as gas tungsten arc welding with a backing material, e.g., refractory metal core. The weld bead is used to build up cracked and worn surfaces. However, there is a risk of excessive heat input melting the backing material. Problems occur when the welding process heats and melts the backing material. If the backing material sustains such damage, the backing material will alloy with the weld metal thus causing an unacceptable repair. In this case, the backing material becomes distorted and results in a rejectable condition. For example, FIG. 1 depicts a cross section of a welded blade tip 2 in which a molybdenum refractory metal core 4 melted during the welding process and subsequently alloyed with the weld material. The dark grey area 6 is where excessive heat input caused the molybdenum to alloy with the weld material. The vertical line 8 indicates where the molybdenum refractory metal core 4 was originally placed. As a result, the molybdenum refractory metal core became distorted (See area 10) and resulted in a rejectable condition.

Consequently, there exists a need for a technique capable of repairing turbine engine blades while avoiding melting refractory metal cores and causing unacceptable repairs.

### SUMMARY OF THE INVENTION

In accordance with one aspect of the present invention, a process for repairing a component broadly comprises placing a piece of refractory metal material over an area of a component to be repaired; depositing a repair filler metal material proximate to the piece of refractory metal material in an amount sufficient to repair the component; subjecting the repair filler material to a welding treatment without directly heating the piece of refractory metal material; flowing the repair filler material within the area; and casting the repair filler material.

In accordance with another aspect of the present invention, a process for repairing a tip portion of a turbine blade broadly comprises positioning a refractory metal material over an area to be repaired of a turbine blade; depositing a repair filler metal material proximate to the refractory metal material; welding the repair filler metal material without directly heating the refractory metal material; flowing the repair filler metal material within the area; and casting the repair filler metal material.

In accordance with yet another aspect of the present invention, a process for repairing a trailing edge of a turbine blade broadly comprises cutting a refractory metal material foil to conform to a trailing edge shape of a turbine blade; positioning the cut refractory metal material foil over a portion of the trailing edge to be repaired; applying a repair filler metal material over the refractory metal material foil; welding the repair filler metal material to effect the repair without directly heating the refractory metal material; flowing the repair filler metal material within the portion; and casting the repair filler metal material.

The details of one or more embodiments of the invention are set forth in the accompanying drawings and the description below. Other features and advantages of the invention will be apparent from the description and drawings, and from the claims.

### BRIEF DESCRIPTION OF THE DRAWINGS

FIG. 1 is a microphotograph showing an unacceptable repair of a turbine engine blade and a distorted refractory metal core of the prior art;
FIG. 2 is a representation of a prepared turbine engine blade with a refractory metal core inserted into a damaged area of the blade tip; and
FIG. 3 is a representation of a prepared turbine engine blade with a refractory metal core inserted into a damaged area of the trailing edge.

Like reference numbers and designations in the various drawings indicate like elements.

### DETAILED DESCRIPTION

In accordance with the present invention, a process is provided for repairing a turbine engine component, such as a turbine blade or vane, formed from a superalloy material, such as a nickel-based or cobalt-based alloy, and used in a gas turbine engine. A disclosed process broadly comprises placing a piece of refractory metal material over the area of the component to be repaired and depositing a repair filler metal material proximate to and around the refractory metal material in an amount sufficient to fill in the space being repaired and welding same. The repair filler metal material beads and flows over the refractory metal material. Successive beading of the repair filler metal material, i.e., repetitive heating via a welding operation, eventually covers the entire refractory metal material and allows the operator to rebuild the blade or vane walls and tip. Throughout the process the refractory metal material does not experience direct exposure to the heat from the successive welding operations.

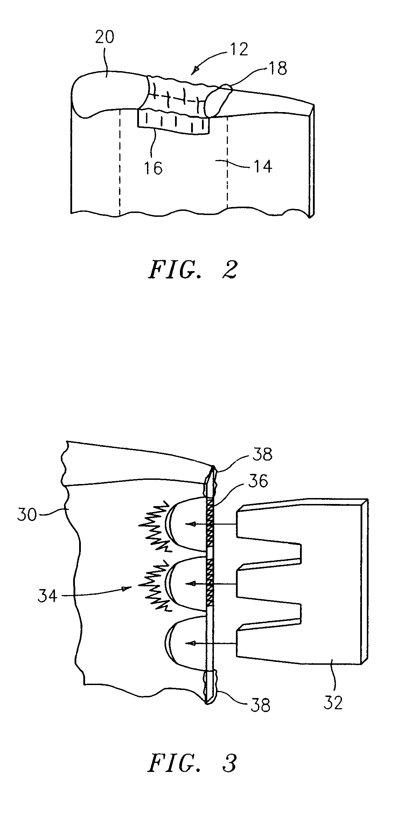

Referring now to FIG. 2, a tip 20 of a turbine blade to be repaired is illustrated. The blade tip 20 has an area 12 to be repaired. The blade tip 20 has an open internal cooling cavity 14 in the area to be repaired. The area 12 has been prepped in order to be repaired as known to one of ordinary skill in the art. The turbine blade may be mounted within a fixture (not shown) having a port. Once mounted, the internal cavity 14 of the turbine blade is in communication with the port. An inert gas may then be introduced to purge the internal cavity 14.

A piece 16 of backing material formed from a refractory metal material may be positioned over the area 12 to be repaired. The refractory metal material preferably has a melting point in excess of 1455°C (2651°F) and most preferably a melting point in excess of 1650°C (3000°F). Suitable refractory metals for the backing material may include, niobium, tantalum, molybdenum, tungsten, metals having a melting point higher than the melting point of the aforementioned superalloy materials, such as platinum, iridium, and the like, and their alloys. The refractory metal backing material may be uncoated or coated.

After the refractory metal material has been positioned in the area 12, a repair filler metal material 18 is deposited over the backing material 16 and subjected to a welding operation. The repair filler metal material is preferably deposited in an amount sufficient to cover at least a portion of the refractory metal material, and preferably the entire piece 16 of refractory metal material. The repair filler metal material 18 may comprise a cobalt based material, such as MERL 72, or a nickel based material, such as INCO 625, Rene 142, PWA 1440, and PWA 36946. Alternatively, the repair filler metal material 18 may be a filler metal of the base alloy composition. The repair filler metal material 18 may be applied using any suitable low heat input welding technique known in the art such as laser powder deposition, laser wire deposition, plasma arc welding- wire and powder, automated gas tungsten arc welding, combinations comprising at least one of the foregoing techniques, and the like.

Optionally, the refractory metal material may be uncoated or coated. If heat input of the repair is high, a diffusion barrier coating can be applied to the refractory metal material. Candidates include, but are not limited to, oxide ceramics such as alumina or mullite. If an oxide ceramic coating is used, an intermediate coating layer such as a silicide may be used to help coating adherence. When coated with ceramic, it is preferred to nickel plate over the alumina or mullite to aid in wetting the repair filler metal. The coating system may also include a nickel aluminide layer left behind after repair to improve the oxidation resistance of the coating. Alternatively, the refractory metal material may just be nickel plated using electrolytic nickel on at least one side if heat input is low. Alternatively, the refractory metal material may be chromium plated on at least one side if heat input is low. The presence of the coating enhances the wettability of the refractory metal material during the welding process.

During the welding step, the heat input may be kept low to prevent the refractory metal material from alloying with the repair filler metal material. The welding operation may precisely melt and bead the repair filler metal material such that the bead flows over and solidifies to cover the refractory metal material. The welding operation is repeated as necessary to rebuild the blade walls and tip 20. Throughout the welding process, the heat source is not applied directly to the refractory metal material. This prevents the refractory metal material from melting and alloying with the repair filler metal material and/or becoming distorted. Once the airfoil material is replaced, the blade tip cap (not shown) can be added in the same operation, thus eliminating the need for an additional welding operation.

Once the repair filler metal material 18 has solidified, the refractory metal material may be removed by an acid chemical treatment using a nitric acid-sulfuric acid solution. For example, the solution may have about 2 parts nitric acid and about 1 part sulfuric acid added to about 2 parts water. The mixture is preferably heated to a temperature up to about 65°C (150°F) to increase the dissolution rate.

Alternatively, the refractory metal material may be removed using an oxidizing heat treatment in which air is flowed through the interior of the blade. The flowing air may be at a temperature in the range of about 760°C (1400°F) to about 900°C (1650°F) and may be flowed through the blade interior for a time in the range of from about 1 to about 4 hours. The oxidizing heat treatment may be performed, for example, either in a furnace, by direct resistant heating, by induction heating, or by a direct light source such as quartz lamps, lasers, infrared sources.

Referring now to FIG. 3, a process for repairing a trailing edge 30 of a turbine blade is illustrated. A piece 32 of refractory metal material is first cut to conform to the shape of the blade trailing edge and any internal cavity 36 therein. Any suitable cutting technique known to one of ordinary skill in the art such as laser cutting, photo etching, stamping, or water jet cutting may be used to cut the refractory metal material. The refractory metal material may be one of the aforementioned materials and may be coated or uncoated as known to one of ordinary skill in the art. The piece 32 of refractory metal material, preferably in foil form, may be placed over the area 34 to be repaired. One of the aforementioned repair filler metal materials 38 may then deposited proximate to the piece of refractory material 32 and subjected to a welding treatment.

During the welding treatment, the heat input may be kept low to prevent the refractory metal material from alloying with the repair filler metal material 38. The welding operation may precisely melt and bead the repair filler metal material 38 such that the bead flows over and solidifies to cover the refractory metal material. The welding operation is repeated as necessary to re-establish the blade trailing edge including its internal cavity 36. Throughout the welding process, the heat source is not applied directly to the refractory metal material. This prevents the refractory metal material from melting and alloying with the repair filler metal material and/or becoming distorted.

After the repair filler metal material has solidified, the refractory metal backing material may be removed using either an acid chemical treatment, such as that described above, or an oxidizing heat treatment, such as that described above.

The present invention is advantageous in that it eliminates the direct heating of the refractory metal material insert. This prevents alloying with the repair filler metal material and/or distortion of the refractory metal material. Due to the prevention of alloying and/or distortion, the refractory metal material can later be removed without the need for extensive post welding blend processing or machining such as EDM machining. This process also facilitates repairing the airfoil and replacing the blade tip cap can be performed in a single operation thus also increasing the turn time in repairing the component. Lastly, the process has particular utility in the repair of investment castings.

One or more embodiments of the present invention have been described. Nevertheless, it will be understood that various modifications may be made without departing from the scope of the invention. Accordingly, other embodiments are within the scope of the following claims.

## Claims

1. A process for repairing a component (20;30), comprising:
placing a piece (16;32) of refractory metal material over an area (12;34) of a component to be repaired;
depositing a repair filler metal material (18;38) proximate to said piece of refractory metal material (16;32) in an amount sufficient to repair said component;
subjecting said repair filler material (18;38) to a welding treatment without directly heating said piece of refractory metal material (16;32);
flowing said repair filler material (18;38) within said area (12;34); and
casting said repair filler material (18;38).

2. The process according to claim 1, wherein said placing step comprises placing a piece of refractory metal material (16;32) formed from a refractory metal material selected from the group consisting of niobium, tantalum, molybdenum, tungsten, a metal having a melting point higher than the melting point of a superalloy, and alloys thereof over said area.

3. The process according to claim 1 or 2, wherein said placing step comprises placing a piece of refractory metal material (16;32) having a melting point in excess of about 1650°C over said area.

4. The process according to claim 3, wherein said refractory metal material (16;32) has a melting point in excess of about 1455°C.

5. The process according to any preceding claim, wherein said component comprises a component for a turbine engine having at least one internal cavity (14;36).

6. The process according to any preceding claim, wherein said refractory metal material is a cut foil (16; 32) which conforms to a shape of at least one internal cavity (14; 36) in said component (20).

7. The process according to any preceding claim, wherein said placing step comprises placing said piece of refractory metal material (16;32) over an area (12;34) of an investment cast component to be repaired.

8. The process according to any preceding claim, wherein said placing step comprises placing a piece of refractory metal material (16;32) having a nickel plating on at least one surface over said area (12;34).

9. The process according to any of claims 1 to 7, wherein said placing step comprises placing a piece of refractory metal material (16;32) having a chromium coating on at least one surface over said area (12;34).

10. The process according to any preceding claim, wherein said placing step comprises placing a piece of refractory metal material (16;32) having a diffusion barrier coating.

11. The process according to claim 10, wherein said placing step comprises placing a piece of refractory metal material (16;32) having a coating comprising an alumina or mullite coating.

12. The process according to claim 10, wherein said placing step comprises placing a piece of refractory metal material (16;32) having an alumina or mullite coating layer and an intermediate silicide layer.

13. The process according to claim 12, wherein said refractory metal material (16;32) further has a nickel plating over said outer layer.

14. The process according to any preceding claim, prior to said placing step further comprising the steps of:
preparing said component for repair;
mounting said component within a fixture;
purging with an inert gas said fixture and at least one internal cavity of said component.

15. The process according to any preceding claim, further comprising repeating said subjecting, flowing and casting steps until completion of the repair of said component.

16. A process for repairing a tip portion (20) of a turbine blade, comprising:
positioning a refractory metal material (16) over an area (12) to be repaired of said turbine blade;
depositing a repair filler metal material (18) proximate to said refractory metal material (16);
welding said repair filler metal material (18) without directly heating said refractory metal material (16);
flowing said repair filler metal material (18) within said area (12); and
casting said repair filler metal material (18).

17. The process according to claim 16, wherein said positioning step comprises positioning a piece of refractory metal material (16) selected from the group consisting of niobium, tantalum, molybdenum, tungsten, a metal having a melting point higher than the melting point of a superalloy, and alloys thereof over said area (12) to be repaired.

18. The process according to claim 16 or 17, wherein said positioning step comprises positioning a piece of refractory metal material (16) plated with a nickel containing material over said area (12) to be repaired.

19. The process according to claim 16 or 17, wherein said positioning step comprises positioning a piece of refractory metal material (16) coated with a chromium containing material over said area (12) to be repaired.

20. The process according to any of claims 16 to 19, wherein said positioning step comprises positioning a piece of refractory metal material (16) having an oxide ceramic coating layer, an intermediate layer of silicide, and a plated nickel outer layer over said area (12) to be repaired.

21. The process according to any of claims 16 to 20, prior to said placing step further comprising the steps of:
preparing said turbine blade for repair;
mounting said turbine blade within a fixture;
purging with an inert gas said fixture and at least one internal cavity (14) of said turbine blade.

22. The process according to any of claims 16 to 21, further comprising repeating said subjecting step until completion of the repair of said turbine blade.

23. A process for repairing a trailing edge of a turbine blade, comprising:
cutting a refractory metal material foil (32) to conform to a trailing edge shape of a turbine blade;
positioning said cut refractory metal material foil (32) over a portion (34) of said trailing edge to be repaired;
applying a repair filler metal material (38) over said refractory metal material foil (32);
welding said repair filler metal material (38) to effect said repair without directly heating said refractory metal material (32);
flowing said repair filler metal material (38) within said portion (34); and
casting said repair filler metal material (38).

24. The process according to claim 23, wherein said cutting step comprises cutting a foil material (32) formed from a refractory metal selected from the group consisting of niobium, tantalum, molybdenum, tungsten, a metal having a melting point higher than the melting point of nickel, and alloys thereof.

25. The process according to claim 24, wherein said foil (32) material has a nickel plating thereon.

26. The process according to claim 24, wherein said foil (32) material has a chromium coating thereon.

27. The process according to claim 24, wherein said foil (32) material has a nickel plated ceramic coating thereon.

28. The process according to any preceding claim, further comprising removing said refractory metal material (16;32) after said welding step has been completed using an acid chemical treatment.

29. The process according to any of claims 1 to 27, further comprising removing said refractory metal material (16;32) after said welding step has been completed using an oxidizing heat treatment.

30. The process according to any of claims 23 to 29, prior to said placing step further comprising the steps of:
preparing said turbine blade for repair;
mounting said turbine blade within a fixture;
purging with an inert gas said fixture and at least one internal cavity of said turbine blade.

31. The process according to any of claims 23 to 30, further comprising repeating said subjecting step until completion of the repair of said trailing edge of said turbine blade.
